# EUROPÄISCHE PATENTSCHRIFT

(11) **EP 0 345 513 B1**
(45) Veröffentlichungstag und Bekanntmachung des Hinweises auf die Patenterteilung: **08.09.1993**
(21) Anmeldenummer: 89109107.6
(22) Anmeldetag: 20.05.1989
(51) Int. Cl.: C08G 65/40

(54) **Benzoxazolgruppen-haltige Polyarylenether und Verfahren zu ihrer Herstellung**
Polyaryleneethers having benzoxazole groups and process for their preparation
Polyarylèneéthers contenant des groupements benzoxazole et procédé pour leur préparation

(30) Priorität: 02.06.1988 DE 3818763
(43) Veröffentlichungstag der Anmeldung: 13.12.1989
(73) Patentinhaber: BAYER AG, 51368 Leverkusen (DE)
(72) Erfinder: Köhler, Burkhard, Dr., D-4150 Krefeld 11 (DE); Meyer, Rolf-Volker, Dr., D-4150 Krefeld (DE)

(56) Entgegenhaltungen:
- EP-A- 0 186 153
- PATENT ABSTRACTS OF JAPAN, Band 11, Nr. 75 (C-408) (2522) 6. März 1987; & JP-A-61 231026

## Beschreibung

Die Erfindung betrifft Benzoxazolgruppen-haltige Polyarylenether und Verfahren zu ihrer Herstellung.

Polyarylenether sind eine wichtige Klasse unter den hochwärmeformbeständigen Kunststoffen. Sie zeichnen sich u.a. durch schwere Entflammbarkeit aus. Sie sind wenig oxidationsanfällig. Amorphe Polyarylenether haben bekannte Vorteile wie thermische Belastbarkeit, teilkristalline Polyarylenether, z.B. PEEK haben eine große Beständigkeit gegenüber Lösungsmitteln und Chemikalien.

Von den aromatischen Polyethern haben z.B. Polyphenylenoxid (PPO), Polyethersulfone (PES, PSO), Polyetherketone (PEEK), Polyetherimide (PEI) technische Bedeutung erlangt.

Diese Polymere können z.B. durch nucleophile Austauschreaktion in dipolar-aprotischen Solventien nach folgendem Schema hergestellt werden: 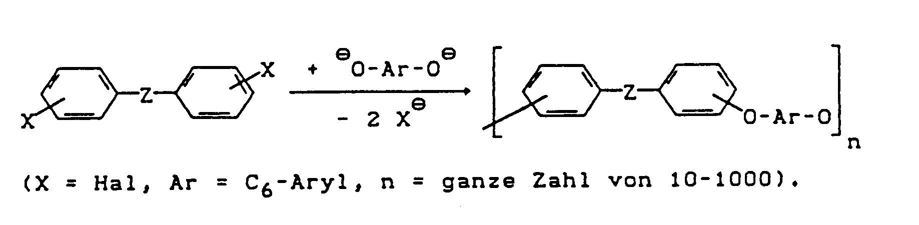
Diese Polymeren enthalten neben Ethergruppen noch eine funktionelle Gruppe Z. Diese kann den Dihalogenaromaten für eine nucleophile Austauschreaktion aktivieren. Jedoch können diese funktionellen Gruppen Z, z.B. Cyan- oder Imidgruppen, hydrolytisch, Sulfongruppen radikalisch und Ketogruppen z.B. photochemisch reagieren.

Die aktivierende Gruppe Z kann nicht nur in die Hauptkette des Polymeren eingebaut sein, sondern als Substituent an den halogen- oder nitrogruppenhaltigen Aromaten. 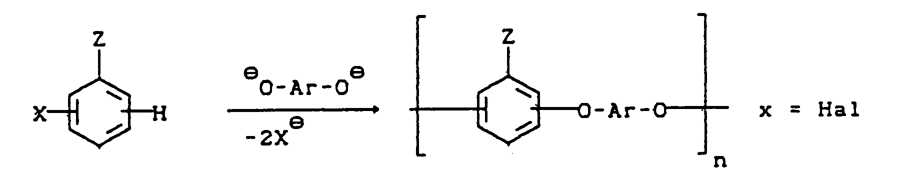
Vorzugsweise eignen sich elektronenziehende Gruppen Z. z.B. eine Cyangruppe reicht aus, um eine Aktivierung zu bewirken. So können aus Dihalogenbezonitrilen und Bisphenolen Polyarylenether hergestellt werden, die in der Polymerhauptkette keine weitere Funktionalität aufweisen (z.B. JA-OS 61 231 026; EP-OS 186 153; Macromol. Chem., Repid Commun. 8, 529-534 (1987)).

Die Cyangruppe kann jedoch leicht hydrolytisch angegriffen werden. Wünschenswert wäre daher ein Polyarylenether mit aktivierenden Gruppen Z außerhalb der Polymerkette, die weitgehend inert sind.

Es wurde nun gefunden, daß man aus 2-Dihalogenphenylbenzoxazolen und bisphenolaten in dipolar-aprotischen Solventien neue Polyarylenether erhalten kann, die eine befriedigende Hydrolysebeständigkeit zeigen.

Gegenstand der Erfindung sind daher Benzoxazolgruppenhaltige Polyarylenether, die aus Monomerbausteinen der Formel I und II hergestellt wurden:

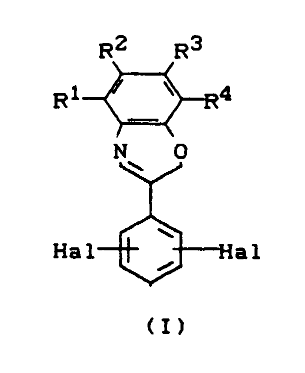

HO-Ar-OH (II)

wobei
- R¹, R², R³ und R⁴: unabhängig voneinander Wasserstoff, C₁-C₂₀-Alkyl, vorzugsweise Methyl, C₆-C₁₄-Aryl, C₇-C₁₄- Alkaryl oder Arylalkyl bedeuten, wobei einer der Reste R¹-R⁴, vorzugsweise R² auch Hal, vorzugsweise Chlor bedeuten kann und wobei jeweils zwei orthoständige Reste auch Glieder eines bis zu 12 C-Atomen enthaltenden Ringes, vorzugsweise einer Benzogruppe, sein können,
- Hal: Fluor, Chlor, Brom oder Jod, vorzugsweise Chlor bedeuten und wobei die Hal-Reste die 2,4- oder 2,6-Positionen des Phenylrings substituieren und
- Ar: m- oder p-Phenylen oder Naphthylen bedeutet oder der Formel III entspricht, 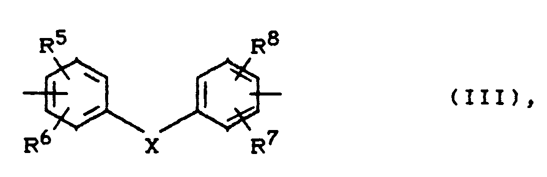
in welcher
- X: eine chemische Bindung, ein Sauerstoffatom, ein Schwefelatom, eine Sulfongruppe oder C₁-C₂₀-Alkylen, vorzugsweise 2,2′-Propylen bedeutet und
- R⁵-R⁸: unabhängig voneinander Wasserstoff, C₁-C₂₀-Alkyl, vorzugsweise Methyl, C₆-C₁₄-Aryl oder ein Halogenatom bedeutet.

Gegenstand der Erfindung ist weiterhin ein Verfahren zur Herstellung der erfindungsgemäßen Benzoxazolgruppen-haltigen Polyarylenether, dadurch gekennzeichnet, daß Monomere der Formeln (I) und (II) im Mol-Verhältnis (I):(II) von 0,98:1 bis 1,02:1 eingesetzt werden, und bezogen auf die Menge an eingesetzten Monomerbausteinen der Formel (II) 1 bis 2, vorzugsweise 1 bis 1,2 Equivalente einer Base eingesetzt werden und die Reaktion in einem dipolar-aprotischen Solvens der Formeln (IV), (V) oder (VI) durchgeführt wird,

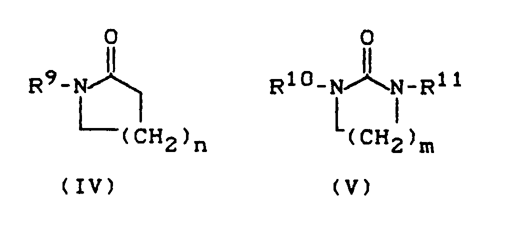

R¹²-Y-R¹³ (IV)

in welchen
- R⁹-R¹³: unabhängig voneinander C₁-C₂₀-Alkyl, vorzugsweise Methyl, C₆-C₂₀-Aryl, vorzugsweise Phenyl bedeuten und wobei R¹² und R¹³ Glieder eines 4 oder 5 Kohlenstoffatome enthaltenden Rings sein können,
- Y: eine Sulfoxid- der Sulfongruppe bedeutet,
- n: für die Zahl 3, 4 oder 5 steht und
- m: für die Zahl 2 oder 3 steht
und das Verhältnis Lösungsmittel zu Feststoff 10:1 bis 1:1 beträgt und die Reaktion 1 bis 50 h, bevorzugt 5-25 h bei einer Reaktionstemperatur 100-350°C, vorzugsweise 150-250°C, durchgeführt wird.

Beispiele für Monomerbausteine der Formel (I) sind 2-(2,4-Dichlorphenyl)-benzoxazol, 6-Chlor-2- (2,4-dichlorphenyl)-benzoxazol, 2-(2,6-Dichlorphenyl)- benzoxazol und 6-Chlor-2-(2,6-dichlorphenyl)- benzoxazol.

Beispiele für Monomerbausteine der Formel (II) sind Hydrochinon, 4,4′-Dihydroxybiphenyl, Bis-(4-hydroxyphenyl)-sulfon, 4,4′-Dihydroxydiphenylether, 4,4′-Dihydroxydiphenylsulfid, 1,6-, 1,7-, 2,6- und 2,7- Naphthalindiol, 2,2-Bis-(4-hydroxyphenyl)-propan, Bis-(4-hydroxyphenyl)-methan, 2,2-Bis-(4-hydroxy-3,5- dimethylphenyl)-propan, 2,2-Bis-(3,5-dichlor-4-hydroxyphenyl)-propan und Bis-(4-hydroxy-3,5-dimethylphenyl)-methan.

Beispiele für Solventien der Formel (IV) sind N-Methylpyrrolidon und N-Methylcaprolactam.

Beispiele für Solventien der Formel (V) sind N,N′-Dimethylimidazolidinon-2, N,N′-Dimethyl-tetrahydropyrimidinon-2 und N,N′-Diisobutylimidazolidinon-2.

Beispiele für Solventien der Formel (VI) sind Dimethylsulfoxid, Diphenylsulfon und Sulfolan.

Beispiele für Basen sind Alkalibasen, z.B. Natriumhydroxid, Kaliumhydroxid, Natriummethanolat, Kaliumcarbonat und Kaliumhydrogencarbonat, vorzugsweise Kaliumcarbonat.

Vor Beginn der Reaktion können Gemische verschiedener Reaktionspartner azeotrop mit einem Schlepper, wie Toluol, Chlorbenzol, Mesitylen oder o-Dichlorbenzol, entwässert werden.

Die Mischung der Reaktionspartner kann in beliebiger Reihenfolge und zu beliebigen Zeitpunkten während der Umsetzung erfolgen.

Die Reaktion kann unter einem Inertgas, z.B. Stickstoff oder Argon, durchgeführt werden.

Die Umsetzungszeit beträgt 1 bis 50 h, bevorzugt 5 bis 25 h. Die Umsetzungstemperatur beträgt 100-350°C, vorzugsweise 150-250°C.

Die Aufarbeitung kann durch Fällen der Polymeren aus der Reaktionslösung in Alkoholen, z.B. Methanol, Ethanol oder Isopropanol, in Wasser, in Wasser-Alkohol-Gemischen oder in verdünnten organischen oder anorganischen Säuren, z.B. Essigsäure oder Phosphorsäure und anschließendes Isolieren und Waschen erfolgen.

Die erfindungsgmeäßen Polyarylenether sind schwer entflammbar und können als Flammschutzadditiv für andere Thermoplasten eingesetzt werden.

### Beispiele

### Beispiel 1

Man legt 0,1 Mol Bisphenol A, 0,1 Mol 2-(2,4-Dichlorphenyl)-benzoxazol, 120 ml N-Methylcaprolactam, 66 ml toluol und 0,12 Mol Pottasche vor und erhitzt 5 h am Wasserabscheider unter Stickstoff. Dann wird das Toluol abdestilliert und 1,5 h auf 230°C erhitzt. Man fällt den Ansatz in 1 l 15 %iger Phosphorsäure und wäscht elektrolytfrei. Das Polymer fällt in einer Ausbeute von 94 % an. Erweichungsbereich: 151-158°C.

### Beispiel 2

Eingesetzt werden 0,1 Mol Bisphenol A und 0,1 Mol 6-Chlor-2-(2,4-dichlorphenyl)-benzoxazol. Ausbeute: 99 %, Erweichungsbereich: 173-181°C.

### Beispiel 3

Eingesetzt werden 0,1 Mol 4,4′-Dihydroxybiphenyl und 0,1 Mol 2-(2,4-Dichlorphenyl)-benzoxazol. Ausbeute 96 %. Erweichungsbereich: 208-210°C.

### Beispiel 4

Eingesetzt werden 0,1 Mol 4,4′-Dihydroxybiphenyl und 0,1 Mol 6-Chlor-2-(2,4-dichlorphenyl)-benzoxazol. Ausbeute: 94 %, Erweichungsbereich: 211-215°C.

## Patentansprüche

1. Benzoxazolgruppen-haltige Polyarylenether hergestellt durch Umsetzung aus Monomerbausteinen der Formel (I) und Monomerbausteinen der Formel (II) 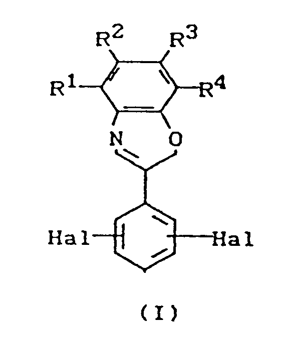
HO-Ar-OH (II)
wobei
R¹, R², R³ und R⁴ unabhängig voneinander Wasserstoff, C₁-C₂₀-Alkyl, C₆-C₁₄- Aryl, C₇-C₁₄-Alkaryl oder Arylalkyl bedeuten, wobei einer der Reste R¹-R⁴ auch Hal bedeuten kann und wobei jeweils zwei orthoständige Reste auch Glieder eines bis zu 12 C- Atomen enthaltenden Ringes sein können,
Hai Fluor, Chlor, Brom oder Jod bedeuten und wobei die Hal-Reste die 2,4- oder 2,6-Positionen des Phenylrings substituieren und
Ar m- oder p-Phenylen oder Naphthylen bedeutet oder der Formel III entspricht, 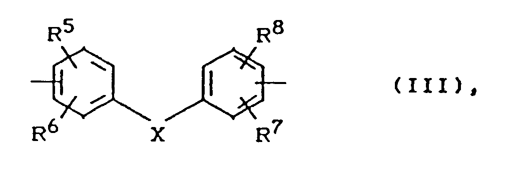
in welcher
X eine chemische Bindung, ein Sauerstoffatom, ein Schwefelatom, eine Sulfongruppe oder C₁-C₂₀-Alkylen bedeutet und
R⁵-R⁸ unabhängig voneinander Wasserstoff, C₁-C₂₀-Alkyl, C₆-C₁₄-Aryl oder ein Halogenatom bedeutet.

2. Verfahren zur Herstellung der Benzoxazolgruppenhaltigen Polyarylenether, dadurch gekennzeichnet, daß Monomere der Formeln (I) und (II) im Mol-Verhältnis (I):(II) von 0,98:1 bis 1,02:1 eingesetzt werden und bezogen auf die Menge an eingesetzten Monomerbausteinen der allgemeinen Formel (II) 1 bis 2 Equivalente einer Base eingesetzt werden und die Reaktion in einem dipolaraprotischen Solvens der Formeln (IV), (V) oder (VI) durchgeführt wird, 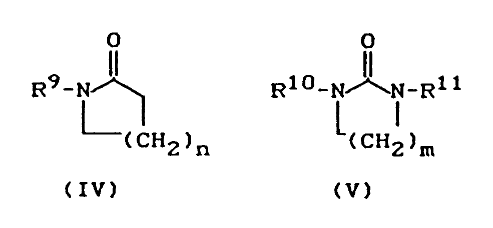
R¹²-Y-R¹³ (IV)
in welchen
R⁹-R¹³ unabhängig voneinander C₁-C₂₀-Alkyl, C₆-C₂₀-Aryl, bedeuten und wobei R¹² und R¹³ Glieder eines 4 oder 5 Kohlenstoffatome enthaltenden Rings sein können,
Y eine Sulfoxid- der Sulfongruppe bedeutet,
n für die Zahl 3, 4 oder 5 steht und
m für die Zahl 2 oder 3 steht
und das Verhältnis Lösungsmittel zu Feststoff 10:1 bis 1:1 beträgt, und die Reaktion 1 bis 50 h bei einer Reaktionstemperatur von 100-350°C durchgeführt wird.

## Claims

1. Polyarylene ethers containing benzoxazole groups, prepared by the reaction of monomer units corresponding to formula (I) and monomer units corresponding to formula (II) 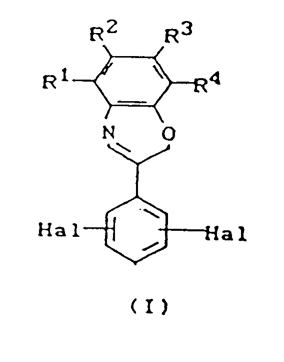
HO-Ar-OH (II)
wherein
R¹, R², R³ and R⁴ denote, independently of one another, hydrogen, C₁-C₂₀-alkyl, C₆-C₁₄-aryl or C₇-C₁₄-alkaryl or arylalkyl and one of the groups R¹-R⁴ may also denote Hal, and any two groups in the ortho-position to one another may also be members of a ring containing up to 12 carbon atoms,
Hal denotes fluorine, chlorine, bromine or iodine and the Hal groups substitute the 2,4- or 2,6-positions of the phenyl ring and
Ar denotes m- or p-phenylene or naphthylene or it corresponds to formula III 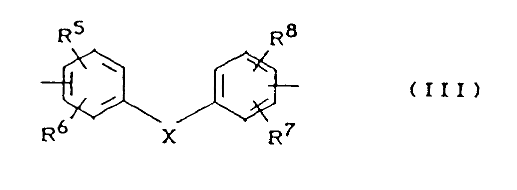
wherein
X denotes a chemical bond, an oxygen atom, a sulphur atom, a sulphone group or C₁-C₂₀-alkylene, and
R⁵-R⁸ denote, independently of one another, hydrogen, C₁-C₂₀-alkyl, C₆-C₁₄-aryl or a halogen atom.

2. A process for the preparation of polyarylene ethers containing benzoxazole groups, characterised in that monomers corresponding to formulae (I) and (II) are used in a molar ratio of (I):(II) of from 0.98:1 to 1.02:1 and, based on the quantity of monomer units of the general formula (II) put into the process, from 1 to 2 equivalents of a base are used, and the reaction is carried out in a dipolar aprotic solvent corresponding to formula (IV), (V) or (VI) 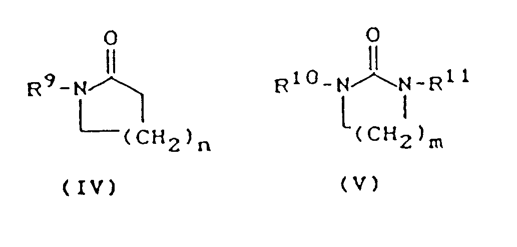
R¹²-Y-R¹³ (IV)
wherein
R⁹-R¹³ denote, independently of one another, C₁-C₂₀-alkyl or C₆-C₂₀-aryl and R¹² and R¹³ may be members of a ring containing 4 or 5 carbon atoms,
Y denotes a sulphoxide or sulphone group,
n stands for the number 3, 4 or 5 and
m stands for the number 2 or 3
and the ratio of solvent to solids is from 10:1 to 1:1 and the reaction is carried out for 1 to 50 hours at a reaction temperature of from 100-350°C.

## Revendications

1. Polyarylène-éthers contenant des groupes benzoxazole, obtenus par réaction de motifs monomères de formule (I) et de motifs monomères de formule (II) 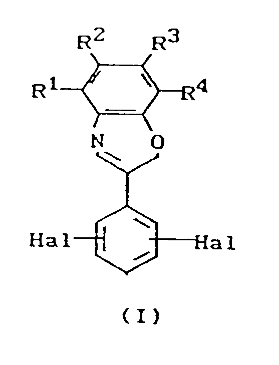
HO-Ar-OH (II)
où
R¹, R², R³ et R⁴ désignent, indépendamment les uns des autres, l'hydrogène, un reste alkyle en C₁ à C₂₀, aryle en C₆ à C₁₄, alkaryle ou arylalkyle en C₇ à C₁₄, l'un des restes R¹ à R⁴ pouvant aussi désigner un halogène et, à chaque fois, deux restes en position ortho pouvant aussi être des membres d'un noyau contenant jusqu'à 12 atomes de carbone,
Hal représente le fluor, le chlore, le brome ou l'iode, les restes Hal substituant les positions 2,4 ou 2,6 du noyau phényle et
Ar désigne un groupe m- ou p-phénylène ou un reste naphtylène ou répond à la formule III 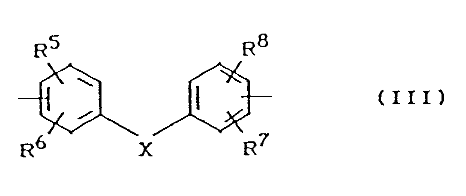
dans laquelle
X est une liaison chimique, un atome d'oxygène, un atome de soufre, un groupe sulfo ou un groupe alkylène en C₁ à C₂₀ et
R⁵-R⁸ représentent, indépendamment les uns des autres, l'hydrogène, un reste alkyle en C₁ à C₂₀, aryle en C₆ à C₁₄ ou un atome d'halogène.

2. Procédé de production des polyarylène-éthers porteurs de groupes benzoxazole, caractérisé en ce qu'on utilise des monomères des formules (I) et (II) dans le rapport molaire (I):(II) de 0,98:1 à 1,02:1 et on utilise 1 à 2 équivlents d'une bse par rapport à la quantité utilisée de motifs monomères de formule (II), et on conduit la réaction dans un solvant aprotique dipolaire des formules (IV), (V) ou (VI) 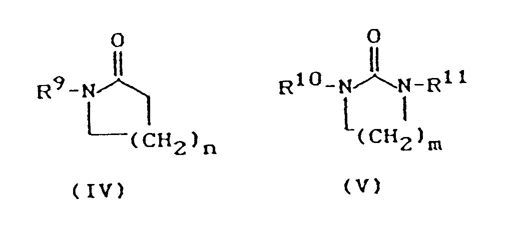
R¹²-Y-R¹³ (IV)
dans lesquelles
R⁹ à R¹³ représentent, indépendamment les uns des autres, un reste alkyle en C₁ à C₂₀ ou aryle en C₆ à C₂₀, et R¹² et R¹³ peuvent être des membres d'un noyau contenant 4 ou 5 atomes de carbone,
Y est un groupe sulfoxyde ou sulfo,
n représente le nombre 3, 4 ou 5 et
m représente le nombre 2 ou 3
et le rapport du solvant à la matière solide va de 10:1 à 1:1, la réaction étant conduite pendant 1 à 50 heures à une température de réaction de 100 à 350°C.
